# EUROPÄISCHE PATENTANMELDUNG

(11) **EP 3 524 412 A1**
(43) Veröffentlichungstag der Anmeldung: **14.08.2019**
(21) Anmeldenummer: 18156271.1
(22) Anmeldetag: 12.02.2018
(51) Int. Cl.: B29C 65/56, F03D 80/30, B29D 99/00

(54) **TEILBARES WINDENERGIEANLAGENROTORBLATT MIT EINER BLITZSCHUTZEINRICHTUNG UND VERFAHREN ZUR HERSTELLUNG EINES SOLCHEN WINDENERGIEANLAGENROTORBLATTS**

(71) Anmelder: Nordex Energy GmbH, 22419 Hamburg (DE)
(72) Erfinder: Ohlerich, Nick, 18055 Rostock (DE)
(74) Vertreter: Hauck Patentanwaltspartnerschaft mbB

(57) **Zusammenfassung**

Windenergieanlagenrotorblatt (10), das in einen blattwurzelseitigen Längsabschnitt (20) und einen blattspitzenseitigen Längsabschnitt (22) teilbar ist, wobei
• die beiden Längsabschnitte (20, 22) jeweils zwei einander gegenüberliegend angeordnete Gurte (32, 40), zwei diese Gurte (32, 40) miteinander verbindende Stege (34, 43) und einen Blitzschutzleiter (38, 52) aufweisen,
• in einem Überlappungsbereich (44) die beiden Stege (42) des blattspitzenseitigen Längsabschnitts (22) zwischen den beiden Stegen (34) des blattwurzelseitigen Längsabschnitts (20) angeordnet sind,
• die beiden Längsabschnitte (20, 22) in dem Überlappungsbereich (44) durch einen Bolzen (26) miteinander verbunden sind, der durch eine innere Bolzenaufnahme der Stege (42) des blattspitzenseitigen Längsabschnitts (22) und durch eine äußere Bolzenaufnahme der Stege (34) des blattwurzelseitigen Längsabschnitts (20) hindurchgeführt ist,
• der Blitzschutzleiter (52) des blattspitzenseitiges Längsabschnitts (22) ein erstes Anschlusselement (66) aufweist, das elektrisch leitend an der inneren Bolzenaufnahme befestigt ist, und
• der Blitzschutzleiter (38) des blattwurzelseitigen Längsabschnitts (20) ein zweites Anschlusselement (68) aufweist, das elektrisch leitend an der äußeren Bolzenaufnahme befestigt ist.

## Beschreibung

Die Erfindung betrifft ein Windenergieanlagenrotorblatt mit einer Blitzschutzeinrichtung, das zwei Längsabschnitte aufweist, deren Stege in einem Überlappungsbereich überlappend angeordnet und über einen Bolzen miteinander verbunden sind. Die Erfindung betrifft ebenfalls ein Verfahren zur Herstellung eines solchen Windenergieanlagenrotorblatts.

Windenergieanlagenrotorblätter weisen immer größere Längen auf. Eine an Bedeutung gewinnende Möglichkeit, mit Transportbeschränkungen umzugehen, besteht in einer Teilung der Windenergieanlagenrotorblätter in mehrere Längsabschnitte. Die Längsabschnitte können getrennt zum Errichtungsort der Windenergieanlage transportiert und dort zusammengefügt werden. Unterschiedliche konstruktive Lösungen sollen eine einfache und den sehr hohen Festigkeitsanforderungen gerecht werdende Verbindung ermöglichen. Beispielsweise wurde ein Verspannen der Längsabschnitte mit Seilen oder ein Verkleben der lasttragenden Elemente vorgeschlagen.

Aus der Druckschrift DE 10 2014 118 004 B3 ist eine Lösung bekannt geworden, bei der die Längsabschnitte aus jeweils zwei Gurten und zwei Stegen bestehende Holmkästen aufweisen, die in einem Überlappungsbereich überlappend angeordnet werden. Die Stege weisen Bolzenaufnahmen in Form von Hülsen oder Buchsen auf, durch die ein Verbindungsbolzen eingesetzt wird.

Aus der Druckschrift EP 1 950 414 B1 ist ein in zwei Längsabschnitte teilbares Windenergieanlagenrotorblatt bekannt geworden, bei dem die Längsabschnitte in einer Teilungsebene stumpf aneinander stoßen. In Längsrichtung ausgerichtete Verbindungsbolzen verspannen die Längsabschnitte miteinander. Sie sind in Gewindeeinsätze eingeschraubt, die in Querbohrungen eines der Längsabschnitte eingesetzt sind und die zugleich als Blitzschutzrezeptoren dienen. Darum werden in den beiden Längsabschnitten verlaufende Blitzschutzleiter im Bereich der Teilungsebene nicht nur miteinander, sondern zusätzlich mit dem Gewindeeinsatz verschraubt.

Aus der Druckschrift EP 2 243 955 B1 ist ein in Längsabschnitte teilbares Windenergieanlagenrotorblatt bekannt geworden, bei dem spezielle Befestigungselemente in einer Teilungsebene aneinanderstoßen und durch in Längsrichtung ausgerichtete Verbindungsbolzen miteinander verschraubt werden. Blitzschutzleiter in den beiden Längsabschnitten enden an Metallwinkeln, die in der Teilungsebene ebenfalls miteinander verschraubt werden.

Aus der Druckschrift DE 10 2011 054 904 A1 ist ein in Längsschnitte teilbares Windenergieanlagenrotorblatt bekannt geworden, zwischen dessen Längsabschnitten eine Art Steckverbindung ausgebildet ist. In einem Verbindungsbereich gibt es Öffnungen, durch die ein Blitzschutzleiter hindurchgeführt wird. Alternativ umfasst einer der Längsabschnitte eine Öffnung, die einen mit einem Blitzschutzleiter des anderen Längsabschnitts verbundenen Metallstift aufnimmt.

Aus der Druckschrift WO 2013/021236 A1 ist ein teilbares Windenergieanlagenrotorblatt bekannt geworden, bei dem einander überlappend angeordnete Holme der beiden Längsabschnitte miteinander verklebt werden. In einem Ausführungsbeispiel ist auch eine Bolzenverbindung genannt. Blitzschutzleiter der beiden Längsabschnitte sind im Verbindungsbereich miteinander verbunden.

Davon ausgehend ist es die Aufgabe der Erfindung, ein Windenergieanlagenrotorblatt mit einer Blitzschutzeinrichtung zur Verfügung zu stellen, das einfach hergestellt und montiert werden kann, sowie ein Verfahren zur Herstellung eines solchen Windenergieanlagenrotorblatts.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt ist in einen blattwurzelseitigen Längsabschnitt und einen blattspitzenseitigen Längsabschnitt teilbar, wobei
- die beiden Längsabschnitte jeweils zwei einander gegenüberliegend angeordnete Gurte, zwei diese Gurte miteinander verbindende Stege und einen Blitzschutzleiter aufweisen,
- in einem Überlappungsbereich die beiden Stege des blattspitzenseitigen Längsabschnitts zwischen den beiden Stegen des blattwurzelseitigen Längsabschnitts angeordnet sind,
- die beiden Längsabschnitte in dem Überlappungsbereich durch einen Bolzen miteinander verbunden sind, der durch eine innere Bolzenaufnahme der Stege des blattspitzenseitigen Längsabschnitts und durch eine äußere Bolzenaufnahme der Stege des blattwurzelseitigen Längsabschnitts hindurchgeführt ist,
- der Blitzschutzleiter des blattspitzenseitiges Längsabschnitts ein erstes Anschlusselement aufweist, das elektrisch leitend an der inneren Bolzenaufnahme befestigt ist, und
- der Blitzschutzleiter des blattwurzelseitigen Längsabschnitts ein zweites Anschlusselement aufweist, das elektrisch leitend an der äußeren Bolzenaufnahme befestigt ist.

Das Windenergieanlagenrotorblatt kann genau zwei Längsabschnitte aufweisen. In diesem Fall umfasst der blattwurzelseitige Längsabschnitt eine Blattwurzel und der blattspitzenseitige Längsabschnitt eine Blattspitze. Möglich ist auch eine größere Anzahl von Längsabschnitten. In diesem Fall reicht der blattwurzelseitige Längsabschnitt nicht bis zur Blattwurzel oder der blattspitzenseitige Längsabschnitt nicht bis zur Blattspitze heran. Stets erstreckt sich jedoch der blattwurzelseitige Längsabschnitt von dem Überlappungsbereich bzw. von einer Teilungsebene in Richtung zu der Blattwurzel hin und der blattspitzenseitige Längsabschnitt erstreckt sich von dem Überlappungsbereich bzw. von der Teilungsebene in Richtung zur Blattspitze hin.

Die beiden Längsabschnitte weisen jeweils zwei einander gegenüberliegend angeordnete Gurte und zwei diese Gurte miteinander verbindende Stege auf. Diese Elemente bilden eine zentrale Tragstruktur des jeweiligen Längsabschnitts, insbesondere einen Kastenholm.

Die Verbindung der beiden Längsabschnitte erfolgt in einem Überlappungsbereich der Stege durch einen Bolzen. Es versteht sich, dass für die Verbindung mehr als ein Bolzen verwendet werden kann, insbesondere zwei Bolzen, die in einem Abstand in Längsrichtung des Windenergieanlagenrotorblatts voneinander angeordnet sind. Dieser Abstand kann so bemessen sein, dass die beiden Bolzenverbindungen die Länge des Überlappungsbereichs optimal ausnutzen. Die Stege und die Gurte können aus einem faserverstärkten Kunststoffmaterial bestehen. Als Verstärkungsfasern können beispielsweise Glasfasern oder Kohlenstofffasern eingesetzt werden.

Im Überlappungsbereich sind die beiden Stege des blattspitzenseitigen Längsabschnitts zwischen den beiden Stegen des blattwurzelseitigen Längsabschnitts angeordnet. Insbesondere können in dem Überlappungsbereich auch die beiden Gurte des blattspitzenseitigen Längsabschnitts zwischen den beiden Gurten des blattwurzelseitigen Längsabschnitts angeordnet sein. Die Gurte und Stege des blattspitzenseitigen Längsabschnitts können einen Kastenholm bilden, der innerhalb eines von den Gurten und Stegen des blattwurzelseitigen Längsabschnitts gebildeten Kastenholms angeordnet ist.

Um die beiden Längsabschnitte im Bereich der Stege mit hinreichender Festigkeit zu verbinden, weisen die beiden Stege des blattspitzenseitigen Längsabschnitts eine innere Bolzenaufnahme auf, durch die der Bolzen hindurchgeführt wird. Hierfür hat die innere Bolzenaufnahme eine Durchgangsöffnung. Die innere Bolzenaufnahme weist ein elektrisch leitfähiges Material, insbesondere Metall, auf. Sie kann ein- oder mehrteilig ausgebildet sein. Beispielsweise können die beiden Stege des blattspitzenseitigen Längsabschnitts jeweils mit einer Metallplatte verstärkt sein, in der jeweils eine Durchgangsöffnung zur Aufnahme des Bolzens ausgebildet ist.

Die Stege des blattwurzelseitigen Längsabschnitts weisen eine äußere Bolzenaufnahme auf. Auch die äußere Bolzenaufnahme weist ein elektrisch leitfähiges Material, beispielsweise Metall, auf. Sie kann zwei- oder mehrteilig ausgeführt sein, wobei an oder in jedem der beiden Stege des blattwurzelseitigen Längsabschnitts ein Teil der äußeren Bolzenaufnahme mit einer Durchgangsöffnung für den Bolzen angeordnet ist. Beispielsweise kann die äußere Bolzenaufnahme von zwei Metallplatten gebildet sein, die jeweils mit einem der beiden Stege des blattwurzelseitigen Längsabschnitts verbunden sind und eine Durchgangsöffnung aufweisen. Diese Metallplatten können mit dem betreffenden Steg beispielsweise verklebt und/oder verschraubt sein. Auch eine Integration der Metallplatten in ein Faserverbundmaterial der Stege ist möglich, beispielsweise in Form einer Schicht oder Lage aus Metall, die an einer Lage eines Fasermaterials oder zwischen zwei solchen Lagen angeordnet ist.

Innere und äußere Bolzenaufnahme werden durch den Bolzen miteinander verspannt, sodass ein elektrischer Kontakt zwischen der inneren und der äußeren Bolzenaufnahme hergestellt wird. Dieser kann durch ein unmittelbares Aneinandergrenzen von innerer und äußerer Bolzenaufnahme erreicht werden. Möglich ist auch die Verwendung eines Zwischenstücks oder mehrerer Zwischenstücke, beispielsweise in Form von Unterlegscheiben.

Der blattspitzenseitige Längsabschnitt weist einen Blitzschutzleiter auf. Dieser kann mit einem oder mehreren Blitzschutzrezeptoren des Windenergieanlagenrotorblatts verbunden sein, beispielsweise mit einem Blattspitzenrezeptor. Der blattwurzelseitige Längsabschnitt weist ebenfalls einen Blitzschutzleiter auf. Dieser kann insbesondere bis in den Bereich einer Blattwurzel bzw. bis zu einem blattwurzelseitigen Ende des blattwurzelseitigen Längsabschnitts geführt sein, wo eine Verbindung zu einem Erdungssystem der Windenergieanlage hergestellt werden kann. Die beiden Blitzschutzleiter weisen eine ausreichende Stromtragfähigkeit zur Ableitung eines Blitzstroms auf. Sie können aus einem Metall, insbesondere aus Kupfer, oder aus einem sonstigen Material mit hinreichender elektrischer Leitfähigkeit bestehen. Bei Verwendung eines Kupferleiters kann ein Gesamtquerschnitt 10 mm² oder mehr, insbesondere etwa 50 mm² betragen. Die Blitzschutzleiter können einen einzigen massiven Leiter oder eine Vielzahl von Einzelleitern aufweisen, beispielsweise als geflochtener Leiter oder als Flechtschlauch.

Bei der Erfindung weist der Blitzschutzleiter des blattspitzenseitigen Längsabschnitts ein erstes Anschlusselement auf, das elektrisch leitend an der inneren Bolzenaufnahme befestigt ist. Beispielsweise kann das erste Anschlusselement mit der inneren Bolzenaufnahme verschraubt oder verschweißt sein. In jedem Fall weist die so hergestellte elektrisch leitende Verbindung eine hinreichende Stromtragfähigkeit zur Ableitung des Blitzstroms auf. Dies gilt ebenso für die elektrisch leitende Befestigung des zweiten Anschlusselements des Blitzschutzleiters des blattwurzelseitigen Längsabschnitts an der äußeren Bolzenaufnahme. In beiden Fällen kann die Befestigung an der jeweiligen Bolzenaufnahme auch ganz oder teilweise durch den Bolzen bewirkt werden. Beispielsweise kann das zweite Anschlusselement so angeordnet sein, dass es im Bereich eines Kopfs oder einer Mutter des Bolzens an der äußeren Bolzenaufnahme anliegt und beim Festziehen des Bolzens mit der äußeren Bolzenaufnahme verspannt wird. Auch in diesem Fall kann ein Zwischenstück wie eine Unterlegscheibe zum Einsatz kommen.

Ein besonderer Vorteil der Erfindung ist, dass die Elemente der Blitzschutzeinrichtung während der Herstellung der beiden Längsabschnitte abschließend montiert werden können. Beim Zusammenfügen der beiden Längsabschnitte im Feld sind keine zusätzlichen Arbeitsschritte für das Herstellen der Verbindung zwischen den beiden Blitzschutzleitern erforderlich. Diese Verbindung entsteht "automatisch" beim Einsetzen des Bolzens durch die beiden Bolzenaufnahmen und beim Verspannen der Bolzenaufnahmen mit dem Bolzen.

Die Erfindung beruht auf der Erkenntnis, dass im Verbindungsbereich der beiden Längsabschnitte nur sehr wenig Bauraum für die Verbindung der Blitzschutzleiter zur Verfügung steht. Insbesondere werden die Abmessungen der Stege und Gurte der beiden Längsabschnitte aus Festigkeitsgründen so gewählt, dass im Überlappungsbereich nur sehr geringe Abstände zwischen diesen Elementen der beiden Längsabschnitte bestehen. Gleichzeitig ist insbesondere der Raum zwischen den Stegen und Gurten des blattspitzenseitigen Längsabschnitts schwer zugänglich, denn die Querschnittsabmessungen sind typischerweise viel zu klein, um weiter als eine Armlänge in den Holmkasten hineingreifen zu können, wobei die Länge des Überlappungsbereichs in der Regel im Bereich zwischen 4 m und 12 m liegt. Außerhalb des von den Stegen und Gurten des blattwurzelseitigen Längsabschnitts gebildeten Holmkastens, also zwischen diesem Holmkasten und einer aerodynamischen Hülle des blattwurzelseitigen Längsabschnitts, gibt es ebenfalls keine einfache Zugangsmöglichkeit. Hierfür müssten die zum Einsetzen der Bolzen vorgesehenen Montageöffnungen in der aerodynamischen Hülle vergrößert oder um weitere Öffnungen ergänzt werden.

Ein besonderer Vorteil der Erfindung besteht in Anbetracht dieser Schwierigkeiten darin, dass die Anbindung der Blitzschutzleiter an die beiden Bolzenaufnahmen bereits während der Herstellung der jeweiligen Längsabschnitte zu einem Zeitpunkt fertiggestellt werden kann, zu dem die betreffenden Bereiche frei zugänglich sind, beispielsweise vor dem Zusammenfügen zweier eine aerodynamische Hülle bildender Halbschalen und/oder vor dem Schließen eines von den Stegen und Gurten gebildeten Holmkastens.

Ein weiterer Vorteil der Erfindung ist, dass die ebenfalls dem Risiko eines Blitzschlags ausgesetzten Elemente der Verbindungseinrichtung, also die Bolzenaufnahmen und der Bolzen, in den Blitzschutz einbezogen sind.

In einer Ausgestaltung weist die innere Bolzenaufnahme eine Hülse auf, die in Öffnungen der Stege des blattspitzenseitigen Längsabschnitts eingesetzt ist und einen Abstand zwischen diesen beiden Stegen überbrückt. Die Hülse kann aus Metall bestehen, insbesondere aus Stahl. Die Öffnungen in den Stegen können Bohrungen in einem faserverstärkten Kunststoffmaterial der Stege sein, in die die Hülse eingesetzt ist. Alternativ können in die Öffnungen der Stege Passungs-, Gleit-, oder Spannbuchsen eingesetzt werden, die die Hülse aufnehmen. Die Hülse kann in axialer Richtung fixiert sein, beispielsweise durch eine Verschraubung eines Außengewindes der Hülse mit einem Innengewinde einer Buchse, durch einen an der Hülse oder an einer Buchse ausgebildeten Flansch und/oder durch eine oder mehrere auf ein Außengewinde der Hülse aufgeschraubte Muttern und/oder durch eine Verspannung mit einer Spannbuchse.

In einer Ausgestaltung weist die äußere Bolzenaufnahme eine Buchse auf, die in eine Öffnung eines Stegs des blattwurzelseitigen Längsabschnitts eingesetzt ist. Es versteht sich, dass insbesondere in beiden Stegen des blattwurzelseitigen Längsabschnitts jeweils eine solche Buchse angeordnet sein kann. Die Buchse kann eine Gleit-, Passungs-, oder Spannbuchse sein. Sie kann einen nach außen weisenden Flansch aufweisen. Die Buchse kann an der inneren Bolzenaufnahme anliegen, um einen unmittelbaren elektrischen Kontakt zwischen innerer und äußerer Bolzenaufnahme herzustellen.

In einer Ausgestaltung ist das erste Anschlusselement und/oder mindestens ein Abschnitt des Blitzschutzleiters des blattspitzenseitigen Längsabschnitts innerhalb eines Holmkastens angeordnet, der von den Stegen und Gurten des blattspitzenseitigen Längsabschnitts gebildet ist. Die Anordnung innerhalb des Holmkastens ist besonders vorteilhaft, weil dort ausreichend Bauraum zur Verfügung steht und die Verbindung zur inneren Bolzenaufnahme von der Innenseite des Holmkastens aus besonders einfach ist. Dies gilt insbesondere in Verbindung mit einer Hülse, die den Freiraum zwischen den beiden Stegen innerhalb des Holmkastens überbrückt.

In einer Ausgestaltung weist das erste Anschlusselement einen Anschlussring oder eine Anschlussschelle auf, die die innere Bolzenaufnahme umschließt. Auf diese Weise kann das erste Anschlusselement insbesondere mit einer Hülse einfach verbunden werden.

In einer Ausgestaltung ist das zweite Anschlusselement außerhalb eines Holmkastens angeordnet, der von den Stegen und Gurten des blattwurzelseitigen Längsabschnitts gebildet ist. Das Befestigen des zweiten Anschlusselements an der äußeren Bolzenaufnahme gelingt von der Außenseite dieses Holmkastens aus vergleichsweise einfach, da innerhalb dieses Holmkastens wegen der dort eingesetzten Stege und Gurte des blattspitzenseitigen Längsabschnitts kein ausreichender Bauraum gegeben ist.

In einer Ausgestaltung weist das zweite Anschlusselement eine Anschlussscheibe mit einer Durchgangsöffnung oder einer Ausnehmung auf, durch die der Bolzen hindurchgeführt ist. In diesem Fall kann das zweite Anschlusselement unabhängig von dem Bolzen an der äußeren Bolzenaufnahme befestigt werden, beispielsweise durch eine gesonderte Verschraubung. Möglich ist jedoch auch, das zweite Anschlusselement mit der Durchgangsöffnung oder der Ausnehmung in geeigneter Position relativ zu der äußeren Bolzenaufnahme anzuordnen und erst beim Hindurchführen und Verspannen des Bolzens das zweite Anschlusselement an der äußeren Bolzenaufnahme zu befestigen.

In einer Ausgestaltung weisen die Gurte des blattwurzelseitigen Längsabschnitts ein Kohlenstofffasermaterial auf und der Blitzschutzleiter des blattwurzelseitigen Längsabschnitts verläuft entlang eines dieser Gurte und ist über eine Potentialausgleichsverbindung mit diesem Gurt elektrisch verbunden. Die Potentialausgleichsverbindung kann von einer Vielzahl in Längsrichtung des Windenergieanlagenrotorblatts voneinander beanstandeter Verbindungsleiter bestehen. Alternativ oder zusätzlich kann eine Potentialausgleichslage im Wesentlichen über die gesamte Länge des betreffenden Gurts an dem Gurt und an dem Blitzschutzleiter anliegen, um den Potentialausgleich herzustellen. Hierfür eignet sich beispielsweise ein dünnes Kupfergitter oder Netz oder eine Lage eines Kohlenstofffasermaterials. Unabhängig von der Konstruktion der Potentialausgleichsverbindung berücksichtigt diese Ausgestaltung die elektrische Leitfähigkeit des Gurts und bezieht diesen in den Blitzschutz ein. Der Blitzschutzleiter kann insbesondere außerhalb eines von den Gurten und Stegen des blattwurzelseitigen Längsabschnitts gebildeten Holmkastens angeordnet sein, z.B. in einem Kern einer in Sandwichbauweise aufgebauten Halbschale, mit der der betreffende Gurt verbunden ist.

In einer Ausgestaltung weist der blattwurzelseitige Längsabschnitt einen weiteren Blitzschutzleiter auf, der entlang des anderen dieser Gurte verläuft und über eine Potentialausgleichsverbindung mit diesem Gurt elektrisch verbunden ist. Bei dieser Ausgestaltung sind beide aufgrund des verwendeten Kohlenstofffasermaterials elektrisch leitfähigen Gurte in den Blitzschutz einbezogen, denn jedem der beiden Gurte ist ein Blitzschutzleiter zugeordnet, zu dem ein Potentialausgleich hergestellt wird. Im Falle eines Blitzschlags beispielsweise im Bereich einer Blattspitze kann der Blitzstrom über die beiden Blitzschutzleiter verteilt abgeführt werden.

In einer Ausgestaltung sind der Blitzschutzleiter des blattwurzelseitigen Längsabschnitts und der weitere Blitzschutzleiter des blattwurzelseitigen Längsabschnitts durch das zweite Anschlusselement elektrisch mit der äußeren Bolzenaufnahme verbunden. Auf diese Weise wird der erforderliche Potentialausgleich zwischen den beiden Blitzschutzleitern hergestellt. Dies gelingt besonders einfach, denn abgesehen von der Montage eines entsprechend angepassten, zweiten Anschlusselements sind keine zusätzlichen Maßnahmen erforderlich, insbesondere nicht beim Zusammenfügen der beiden Längsabschnitte.

In einer Ausgestaltung weist der blattspitzenseitige Längsabschnitt einen zweiten Blitzschutzleiter auf, wobei der Blitzschutzleiter des blattspitzenseitigen Längsabschnitts und der zweite Blitzschutzleiter des blattspitzenseitigen Längsabschnitts jeweils an einer Innenseite eines der Gurte des blattspitzenseitigen Längsabschnitts angeordnet und am blattwurzelseitigen und/oder am blattspitzenseitigen Ende dieser Gurte über eine Verbindungsleitung elektrisch miteinander verbunden sind. In diesem Fall befinden sich an beiden Gurten des blattspitzenseitigen Längsabschnitts Blitzschutzleiter, zwischen denen ein Potentialausgleich hergestellt ist. Dies ist insbesondere bei Verwendung von Gurten aus einem Kohlenstofffasermaterial von Vorteil, da diese elektrisch leitfähigen Gurte dann insbesondere auch im Überlappungsbereich, wo sie innerhalb eines von den Gurten und Stegen des blattwurzelseitigen Längsabschnitts gebildeten Holmkastens angeordnet sind, einen Potentialausgleich erfahren können.

In einer Ausgestaltung weisen die Gurte des blattspitzenseitigen Längsabschnitts ein Kohlenstofffasermaterial auf und der blattspitzenseitige Längsabschnitt weist zwei weitere Blitzschutzleiter auf, die jeweils entlang eines dieser Gurte verlaufen und über eine Potentialausgleichsverbindung mit diesem Gurt elektrisch verbunden sind, wobei die beiden weiteren Blitzschutzleiter des blattspitzenseitigen Längsabschnitts an einem blattspitzenseitigen Ende des blattspitzenseitigen Längsabschnitts über ein Verbindungskabel und/oder über mindestens eine an einer Außenseite des Windenergieanlagenrotorblatts angeordnete Potentialausgleichsschiene elektrisch miteinander verbunden sind. Zur Anordnung der Blitzschutzleiter entlang der Gurte und zur Ausführung der Potentialausgleichsverbindungen wird auf die vorstehenden Erläuterungen dieser Merkmale im Zusammenhang mit dem blattwurzelseitigen Längsabschnitt verwiesen, die entsprechend gelten. Für die erforderliche Potentialausgleichsverbindung zwischen den beiden Blitzschutzleitern kann im Bereich des blattspitzenseitigen Endes ein Verbindungskabel eingesetzt werden, beispielsweise ein vorkonfektioniertes Kabel, das zugleich die Verbindung zu einem Blattspitzenrezeptor herstellt und das mit den beiden weiteren Blitzschutzleitern verschraubt wird. Alternativ oder zusätzlich kann ein Potentialausgleich über an der Außenseite des Windenergieanlagenrotorblatts angeordnete Potentialausgleichsschienen hergestellt werden. Dies kann bevorzugt an mehreren, voneinander beanstandeten Längspositionen des blattspitzenseitigen Längsabschnitts geschehen.

Die oben angegebene Aufgabe wird ebenfalls gelöst durch das Verfahren mit den Merkmalen des Anspruchs 13. Vorteilhafte Ausgestaltungen sind in den sich anschließenden Unteransprüchen angegeben.

Das Verfahren dient zur Herstellung eines Windenergieanlagenrotorblatts, das in einen blattwurzelseitigen Längsabschnitt und einen blattspitzenseitigen Längsabschnitt teilbar ist, und weist die folgenden Schritte auf:
- Herstellen des blattwurzelseitigen Längsabschnitts, der zwei einander gegenüberliegend angeordnete Gurte, zwei diese Gurte miteinander verbindende Stege und einen Blitzschutzleiter aufweist, wobei eine elektrisch leitende Verbindung zwischen einer äußeren Bolzenaufnahme der Stege und dem Blitzschutzleiter hergestellt wird,
- Herstellen des blattspitzenseitigen Längsabschnitts, der zwei einander gegenüberliegend angeordnete Gurte, zwei diese Gurte miteinander verbindende Stege und einen Blitzschutzleiter aufweist, wobei eine elektrisch leitende Verbindung zwischen einer inneren Bolzenaufnahme der Stege und dem Blitzschutzleiter hergestellt wird,
- Anordnen der beiden Längsabschnitte relativ zueinander derart, dass in einem Überlappungsbereich die beiden Stege des blattspitzenseitigen Längsabschnitts zwischen den beiden Stegen des blattwurzelseitigen Längsabschnitts angeordnet sind,
- Hindurchführen eines Bolzens durch die äußere Bolzenaufnahme und durch die innere Bolzenaufnahme, und
- Herstellen sowohl einer mechanischen Verbindung der beiden Längsabschnitte miteinander als auch einer elektrischen Verbindung zwischen den beiden Blitzschutzleitern durch Verspannen der beiden Bolzenaufnahmen miteinander mit dem Bolzen.

Zu den Merkmalen und Vorteilen des Verfahrens wird auf die vorstehenden Erläuterungen des Windenergieanlagenrotorblatts verwiesen, die entsprechend gelten. Das Verfahren kann insbesondere zur Herstellung eines Windenergieanlagenrotorblatts in einer der vorstehend erläuterten Ausgestaltungen eingesetzt werden. Hierzu können die Schritte des Verfahrens weiter ausgestaltet oder um zusätzliche Schritte ergänzt werden, die zur Herstellung des Windenergieanlagenrotorblatts in einer der beschriebenen Ausgestaltungen führen. Beispielsweise können ein erstes Anschlusselement und/oder ein zweites Anschlusselement vorhanden sein und elektrisch in der zuvor zum Windenergieanlagenrotorblatt erläuterten Weise montiert werden, die innere und/oder äußere Bolzenaufnahme können so beschaffen sein, wie es vorstehend erläutert wurde, und/oder es können zweite und/oder weitere Blitzschutzleiter so angeordnet werden, wie vorstehend beschrieben.

Es versteht sich, dass bei dem Verfahren mehrere Bolzen zur Verbindung der beiden Längsabschnitte miteinander verwendet werden können, wie vorstehend erläutert. Wahlweise können alle weiteren Bolzen ebenfalls durch innere und äußere Bolzenaufnahmen hindurchgeführt werden, die wie diejenigen des Bolzens mit jeweils einem der Blitzschutzleiter elektrisch verbunden sind bzw. durch Verspannen der weiteren Bolzen damit verbunden werden.

Das Herstellen der beiden Längsabschnitte kann insbesondere in vier Schritten wie folgt bewerkstelligt werden. Zunächst können in einem ersten Herstellungsschritt eine erste Halbschale des blattwurzelseitigen Längsabschnitts und eine erste Halbschale des blattspitzenseitigen Längsabschnitts in einer gemeinsamen Herstellungsform gefertigt werden. Dies kann insbesondere durch Einlegen geeigneter Verstärkungsfasern in die Herstellungsform und Aushärten eines Kunststoffmaterials, das die Verstärkungsfasern umgibt, erfolgen. Im selben Fertigungsschritt können die dieser Halbschale zugeordneten Gurte durch Einlegen weiterer, die Gurte bildender Verstärkungsfasern in die Herstellungsform hergestellt werden, oder durch Einlegen vorgefertigter Gurte in die Herstellungsform und Integration in die betreffende Schale. Während dieses ersten Herstellungsschritts können die beiden Blitzschutzleiter in die betreffenden Längsabschnitte der Halbschale integriert werden.

Anschließend kann in einem zweiten Herstellungsschritt eine Stegbaugruppe, die die vier Stege der beiden Längsabschnitte umfasst, in der so hergestellten Halbschale angeordnet und mit dieser verbunden werden. Während dieses Herstellungsschritts können die Stege in der für das fertige Windenergieanlagenrotorblatt vorgesehenen Weise mit dem Bolzen über die inneren und äußeren Bolzenaufnahmen verbunden werden.

Nachfolgend werden in einem dritten Herstellungsschritt die elektrisch leitenden Verbindungen zwischen dem Blitzschutzleiter des blattspitzenseitigen Längsabschnitts und der inneren Bolzenaufnahme sowie zwischen dem Blitzschutzleiter des blattwurzelseitigen Längsabschnitts und der äußeren Bolzenaufnahme hergestellt, wahlweise durch Befestigen erster und zweiter Anschlusselemente, wie zuvor erläutert.

In einem vierten Herstellungsschritt werden die ersten Halbschalen mit in einer separaten Herstellungsform vorgefertigten, zweiten Halbschalen zu dem Windenergieanlagenrotorblatt zusammengefügt. Die der zweiten Halbschale zugeordneten Gurte können entweder in die vorgefertigten, zweiten Halbschalen integriert sein oder sie können vor dem Zusammenfügen der Halbschalen mit den bereits in der ersten Halbschale angeordneten Stegen verbunden werden. Beispielsweise können die ersten Halbschalen eine Druckseite des Windenergieanlagenrotorblatts und die zweiten Halbschalen eine Saugseite des Windenergieanlagenrotorblatts bilden oder umgekehrt.

In einer Ausgestaltung wird die elektrisch leitende Verbindung zwischen der inneren Bolzenaufnahme der Stege und dem Blitzschutzleiter des blattspitzenseitigen Längsabschnitts hergestellt, bevor ein von den Gurten und Stegen des blattspitzenseitigen Längsabschnitts gebildeter Holmkasten geschlossen wird. Dies vereinfacht die Montage.

In einer Ausgestaltung wird die elektrisch leitende Verbindung zwischen der äußeren Bolzenaufnahme und dem Blitzschutzleiter des blattwurzelseitigen Längsabschnitts hergestellt, bevor zwei Halbschalen des blattwurzelseitigen Längsabschnitts zu einer aerodynamischen Hülle des blattwurzelseitigen Längsabschnitts zusammengefügt werden und/oder bevor ein von den Gurten und Stegen des blattwurzelseitigen Längsabschnitts gebildeter Holmkasten geschlossen wird. Auch diese Abfolge der einzelnen Arbeitsschritte erleichtert die Montage.

Nachfolgend wird die Erfindung anhand von in Figuren dargestellten Ausführungsbeispielen näher erläutert. Es zeigen:
- Fig. 1: ein Windenergieanlagenrotorblatt in vier schematisch vereinfachten Ansichten, nämlich mit Blick auf die Profilnasenkante, auf die Druckseite, auf die Profilendkante und auf die Saugseite,
- Fig. 2: Querschnitte durch Teile des Windenergieanlagenrotorblatts aus Fig. 1 an zwei unterschiedlichen Längspositionen,
- Fig. 3: einen Querschnitt durch Teile des Windenergieanlagenrotorblatts aus Fig. 1 an einer weiteren Längsposition,
- Fig. 4: eine Stegbaugruppe des Windenergieanlagenrotorblatts aus Fig. 1 in einer perspektivischen Ansicht und einer Explosionsdarstellung,
- Fig. 5: eine Gurtbaugruppe des blattwurzelseitigen Längsabschnitts des Windenergieanlagenrotorblatts aus Fig. 1 in einer perspektivischen Ansicht und einer Explosionsdarstellung,
- Fig. 6: eine Gurtbaugruppe des blattspitzenseitigen Längsabschnitts des Windenergieanlagenrotorblatts aus Fig. 1 in einer perspektivischen Ansicht und einer Explosionsdarstellung,
- Fig. 7: eine erste Halbschale des Windenergieanlagenrotorblatts aus Fig. 1 mit den beiden Gurtbaugruppen in einer perspektivischen Ansicht und einer Explosionsdarstellung,
- Fig. 8: die Anordnung aus Fig. 7, ergänzt um die Stegbaugruppe aus Fig. 4 in einer perspektivischen Ansicht,
- Fig. 9: die Anordnung aus Fig. 8 nach dem Ergänzen erster und zweiter Anschlusselemente,
- Fig. 10: ein zweites Anschlusselement des Windenergieanlagenrotorblatts aus Fig. 1 in einer perspektivischen Ansicht,
- Fig. 11: ein Detail der Anordnung aus Fig. 9 in einem Längsschnitt,
- Fig. 12: die Anordnung aus Fig. 9 nach dem Zusammenfügen mit den zweiten Halbschalen,
- Fig. 13: eine schematische Darstellung der Gurte und Blitzschutzleiter des Windenergieanlagenrotorblatts aus Fig. 1,
- Fig. 14: eine der Fig. 13 entsprechende schematische Darstellung eines weiteren Ausführungsbeispiels,
- Fig. 15: eine der Fig. 13 entsprechende, schematische Darstellung noch eines weiteren Ausführungsbeispiels.

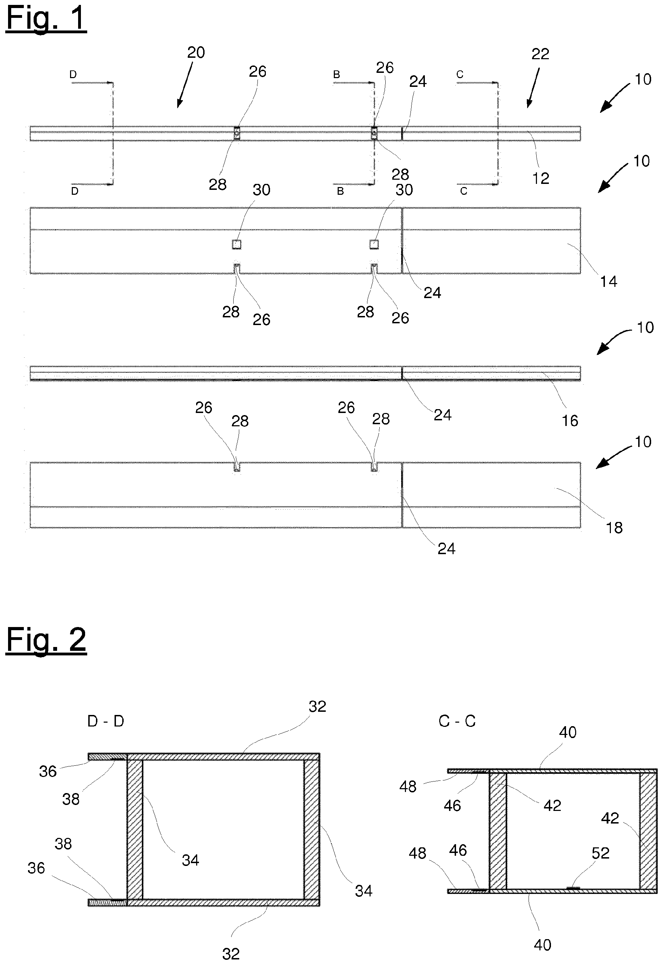

Fig. 1 zeigt ein Windenergieanlagenrotorblatt 10 in vier verschiedenen Ansichten, nämlich von oben nach unten mit Blick auf die Profilnasenkante 12, auf die Druckseite 14, auf die Profilendkante 16 und auf die Saugseite 18. Die Darstellung ist insoweit schematisch, als von der genauen aerodynamischen Kontur und vom exakten Umriss des Windenergieanlagenrotorblatts 10 abstrahiert ist. Man erkennt jedoch einen blattwurzelseitigen Längsabschnitt 20 und einen blattspitzenseitigen Längsabschnitt 22, aus denen das Windenergieanlagenrotorblatt 10 zusammengefügt ist. Es kann zum Transport in diese beiden Längsabschnitte 20, 22 geteilt werden. Die beiden Längsabschnitte 20, 22 grenzen in einer senkrecht zu einer Längsrichtung des Windenergieanlagenrotorblatts 10 ausgerichteten Teilungsebene 24 aneinander an.

Die Verbindung der beiden Längsabschnitte 20, 22 miteinander erfolgt mittels zweier Bolzen 26. Die Bolzen 26 sind jeweils durch eine Montageöffnung 28 an der Profilnasenkante 12 und durch eine weitere Montageöffnung 30 in einer Wandung der Druckseite hindurch zugänglich. Abgesehen von den Montageöffnungen 28, 30 ist die aerodynamische Hülle des Windenergieanlagenrotorblatts 10 geschlossen. Nach dem Einsetzen der Bolzen können auch die Montageöffnungen 28, 30 geschlossen werden.

Fig. 2 zeigt Querschnitte durch Teile des Windenergieanlagenrotorblatts 10 aus Fig. 1 entlang der mit C-C und D-D bezeichneten Schnittebenen. Die aus zwei Halbschalen gebildete aerodynamische Hülle des Windenergieanlagenrotorblatts 10 ist in Fig. 2 nicht gezeigt. Der Querschnitt an der Längsposition D-D durch den blattwurzelseitigen Längsabschnitts 20 zeigt jedoch, dass dieser zwei einander gegenüberliegend angeordnete Gurte 32 und zwei diese miteinander verbindende, ebenfalls einander gegenüberliegend angeordnete Stege 34 aufweist. Diese Gurte 32 und Stege 34 bilden gemeinsam einen Holmkasten mit rechteckigem Querschnitt.

In Richtung zu einer in Fig. 2 nicht dargestellten Profilendkante 16 hin grenzt an jeden der beiden Gurte 32 ein Einleger 36 aus einem Kernmaterial an, der an seiner nach innen weisenden Fläche eine Nut aufweist, in der ein Blitzschutzleiter 38 des blattwurzelseitigen Längsabschnitts 20 angeordnet ist. Die Blitzschutzleiter 38 verlaufen somit entlang der Gurte 32.

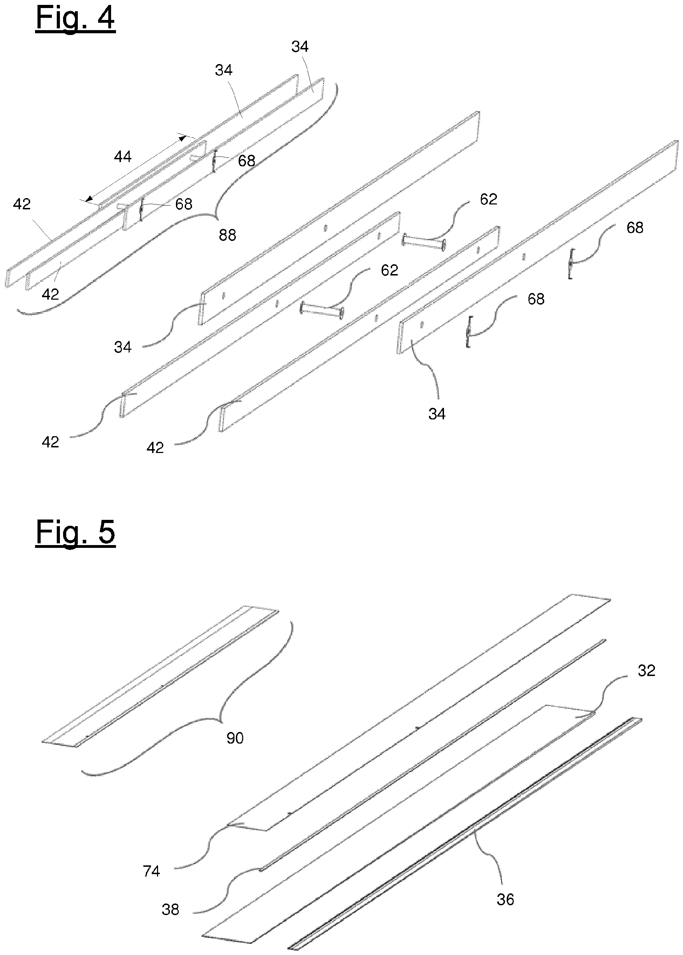

Der weitere in Fig. 2 dargestellte Querschnitt entlang der Schnittebene C-C verläuft durch den blattspitzenseitigen Längsabschnitt 22. Dort gibt es ebenfalls zwei einander gegenüberliegend angeordnete Gurte 40 und zwei diese miteinander verbindende, ebenfalls einander gegenüberliegend angeordnete Stege 42. Auch diese Gurte 40 und Stege 42 bilden gemeinsam einen Holmkasten mit rechteckigem Querschnitt. Die Abmessungen dieses Holmkastens des blattspitzenseitigen Längsabschnitts 22 sind kleiner als diejenigen des Holmkastens des blattwurzelseitigen Längsabschnitts 20, sodass die beiden Stege 42 des blattspitzenseitigen Längsabschnitts zwischen den beiden Stegen 34 des blattwurzelseitigen Längsabschnitts angeordnet werden können. Dies gilt jedenfalls in einem an die Teilungsebene 24 angrenzenden, innerhalb des blattwurzelseitigen Längsabschnitts 20 ausgebildeten Überlappungsbereichs 44 (siehe Fig. 4).

Entlang der Gurte 40 des blattspitzenseitigen Längsabschnitts 22 verlaufen zwei weitere Blitzschutzleiter 46, die jeweils in einer Nut in einer nach innen weisenden Fläche eines Einlegers 48, der in Richtung zur Profilendkante 16 hin an einen der Gurte 40 angrenzt, angeordnet sind. An einem der Gurte 40 des blattspitzenseitigen Längsabschnitts verläuft innen ein Blitzschutzleiter 52 des blattspitzenseitigen Längsabschnitts 22.

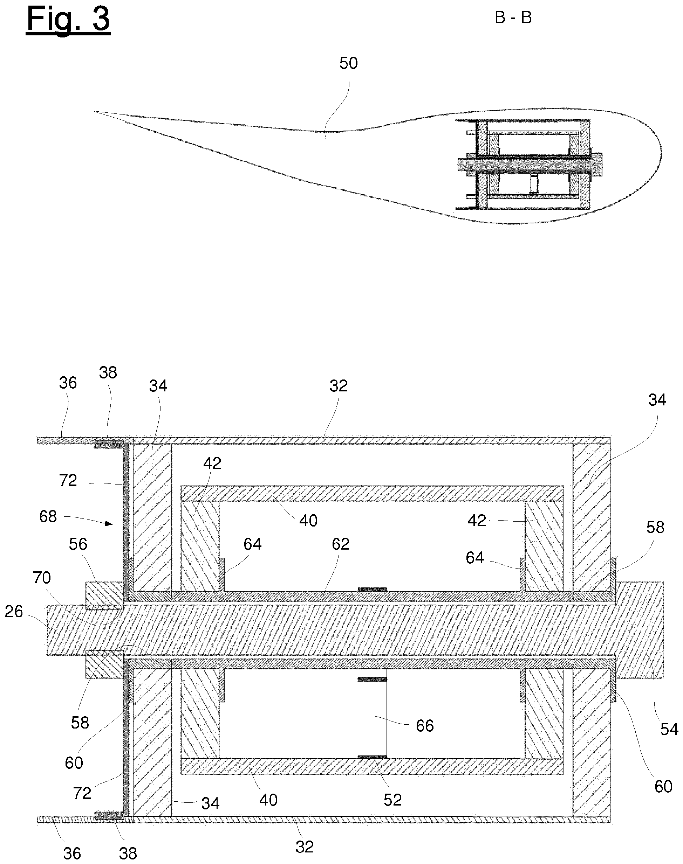

Fig. 3 zeigt im oberen Teil einen Querschnitt durch das Windenergieanlagenrotorblatt 10 aus Fig. 1 in der mit B-B bezeichneten Schnittebene. Dort ist eine aerodynamische Hülle 50 des Windenergieanlagenrotorblatts 10 angedeutet. Die innerhalb der aerodynamischen Hülle 50 gezeigten Elemente sind im unteren Teil der Fig. 3 vergrößert dargestellt. Man erkennt die Gurte 32, Stege 34, Einleger 36 und Blitzschutzleiter 38 des blattwurzelseitigen Längsabschnitts 20 sowie die Gurte 40 und Stege 42 des blattspitzenseitigen Längsabschnitts 22. Die Stege 42 des blattspitzenseitigen Längsabschnitts 22 sind zwischen den Stegen 34 des blattwurzelseitigen Längsabschnitts 20 angeordnet.

Ebenfalls in der Fig. 3 erkennbar ist der Bolzen 26, der an einem Ende einen Kopf 54 aufweist und am anderen Ende mit einer Mutter 56 gesichert ist.

Die beiden Stege 34 des blattwurzelseitigen Längsabschnitts 20 weisen jeweils eine Bohrung auf, in die eine Buchse 58, die an einer ihrer Stirnseiten einen nach außen weisenden Flansch 60 aufweist, eingesetzt ist. Gemeinsam bilden diese beiden Buchsen 58 eine äußere Bolzenaufnahme.

Die beiden Stege 42 des blattspitzenseitigen Längsabschnitts 22 weisen ebenfalls jeweils eine Bohrung auf. In diese ist eine den Abstand zwischen den beiden Stegen 42 überbrückende Hülse 62 eingesetzt. Diese Hülse 62 bildet eine innere Bolzenaufnahme. Die axiale Lage der Hülse 62 ist durch zwei an den Innenseiten der Stege 42 anliegende Flanschelemente 64 gesichert. Die Flanschelemente 64 können beispielsweise auf ein Außengewinde der Hülse 62 aufgeschraubte Scheiben sein.

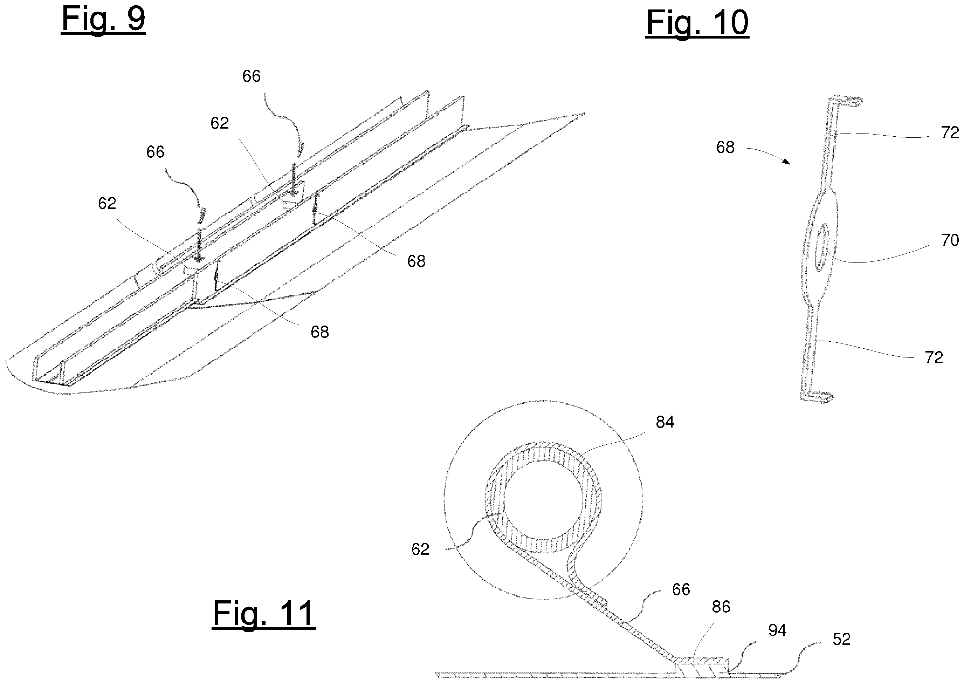

Der Blitzschutzleiter 52 des blattspitzenseitigen Längsabschnitts 22 weist ein erstes Anschlusselement 66 auf, dass elektrisch leitend mit der Hülse 62 verbunden ist. Einzelheiten hierzu werden später anhand der Fig. 11 erläutert.

Eine der Buchsen 58 liegt an einem zweiten Anschlusselement 68 an. Dieses weist eine Durchgangsöffnung 70 auf, durch die der Bolzen 26 ebenso wie durch die beiden Buchsen 58 und die Hülse 62 hindurchgeführt ist. Durch Anziehen der Mutter 56 auf dem Bolzen 26 wird das zweite Anschlusselement 68 mit der in Fig. 3 links dargestellten Buchse 58 verspannt und dadurch an der äußeren Bolzenaufnahme 58 befestigt.

Das zweite Anschlusselement 68 weist zusätzlich zu einer mittig angeordneten Anschlussscheibe, die die Durchgangsöffnung 70 aufweist, zwei nach außen weisende Arme 72 auf, deren Enden abgewinkelt und mit jeweils einem der Blitzschutzleiter 38 des blattwurzelseitigen Längsabschnitts 20 verbunden sind. Durch das Einsetzen und Befestigen des Bolzens 26 wird somit eine elektrische Verbindung zwischen den Blitzschutzleitern 38 des blattwurzelseitigen Längsabschnitts 20 und dem Blitzschutzleiter 52 des blattspitzenseitigen Längsabschnitts 22 hergestellt.

Man erkennt, dass das zweite Anschlusselement 68 außerhalb des von den Gurten 32 und Stegen 34 des blattwurzelseitigen Längsabschnitts 20 gebildeten Holmkastens angeordnet ist, und dass das erste Anschlusselement 66 und der Blitzschutzleiter 52 des blattspitzenseitigen Längsabschnitts innerhalb des von den Gurten 40 und Stegen 42 gebildeten Holmkastens angeordnet ist.

Fig. 4 zeigt eine Stegbaugruppe 88, die die Stege 34 und 42 der beiden Längsabschnitte 20, 22 umfasst. In einem Überlappungsbereich 44 sind die beiden Stege 42 des blattspitzenseitigen Längsabschnitts 22 zwischen den beiden Stegen 34 des blattwurzelseitigen Längsabschnitts 20 angeordnet. Zwischen den beiden Stegen 42 des blattspitzenseitigen Längsabschnitts sind zwei Hülsen 62 angeordnet. Ebenfalls in Fig. 4 dargestellt sind zwei zweite Anschlusselemente 68, die an einer Außenseite eines der Stege 34 des blattwurzelseitigen Längsabschnitts 20 angeordnet sind.

Fig. 5 zeigt eine Gurtbaugruppe 90 des blattwurzelseitigen Längsabschnitts 20. Sie umfasst den Gurt 32, den daran angrenzenden Einleger 36 sowie den in die Nut des Einlegers 36 eingelegten Blitzschutzleiter 38. Diese Anordnung wird von einer Potentialausgleichslage 74 überdeckt, die an den nach innen weisenden Flächen des Gurts 32 und des Blitzschutzleiters 38 anliegt und so einen Potentialausgleich herbeiführt.

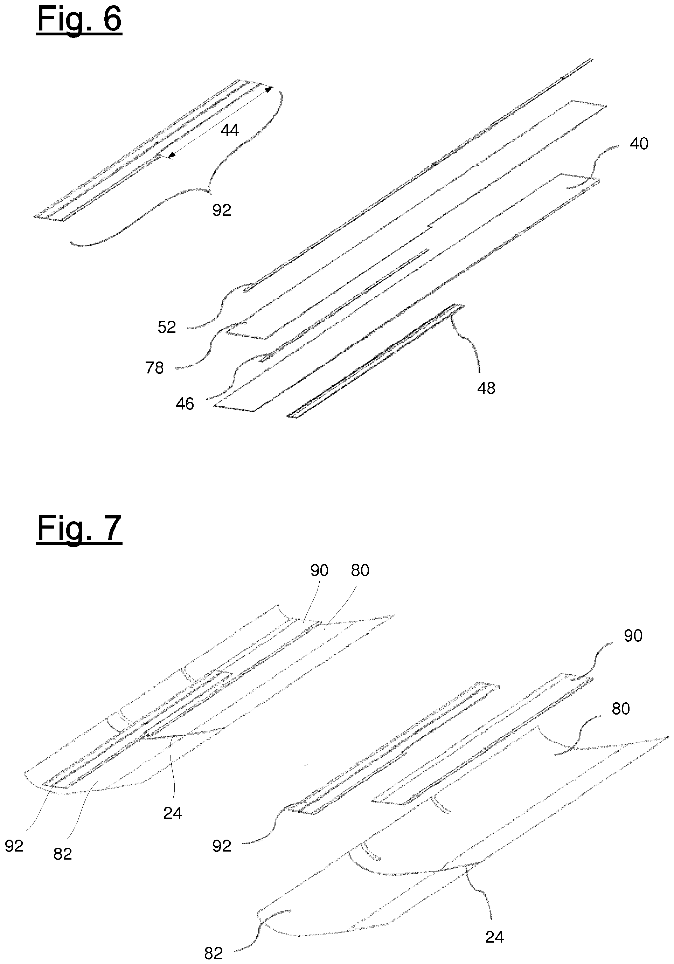

Fig. 6 zeigt eine Gurtbaugruppe 92 des blattspitzenseitigen Längsabschnitts 22. Sie umfasst einen Gurt 40, einen daran angrenzenden Einleger 48, der eine Nut aufweist, in der einer der weiteren Blitzschutzleiter 46 angeordnet ist, und den Blitzschutzleiter 52 des blattspitzenseitigen Längsabschnitts 22 sowie eine Potentialausgleichslage 78. Die Potentialausgleichslage 78 ist an einer Innenseite des Gurts 40 und an einer Innenseite des weiteren Blitzschutzleiters 46 angeordnet, sodass sie zwischen diesen Elementen einen Potentialausgleich herbeiführt.

Der Blitzschutzleiter 52 ist oberhalb der Potentialausgleichslage 78 und etwa mittig an dem Gurt 40 angeordnet. Der Blitzschutzleiter 52 erstreckt sich über die gesamte Länge des Gurts 40, während der weitere Blitzschutzleiter 46 etwa an der Teilungsebene 24 endet. An die Teilungsebene 24 grenzt in der Fig. 6 nach hinten/rechts der Überlappungsabschnitt 44 an.

Fig. 7 zeigt eine erste Halbschale des Windenergieanlagenrotorblatts 10, die eine erste Halbschale 80 des blattwurzelseitigen Längsabschnitts 20 und eine erste Halbschale 82 des blattspitzenseitigen Längsabschnitts 22 umfasst. Beide grenzen an der Teilungsebene 44 aneinander an. Die Gurtbaugruppe 90 des blattwurzelseitigen Längsabschnitts 20 erstreckt sich über die gesamte Länge des blattwurzelseitigen Längsabschnitts 20 bzw. der ersten Halbschale 80 dieses Längsabschnitts 20. Die Gurtbaugruppe 92 des blattspitzenseitigen Längsabschnitts 22 erstreckt sich über die gesamte Länge des blattspitzenseitigen Längsabschnitts 22 bzw. der ersten Halbschale 82 dieses Längsabschnitts und dann weiter über die Teilungsebene 44 hinaus oberhalb der Gurtbaugruppe 90 des blattwurzelseitigen Längsabschnitts 20 in den blattwurzelseitigen Längsabschnitts 20 hinein.

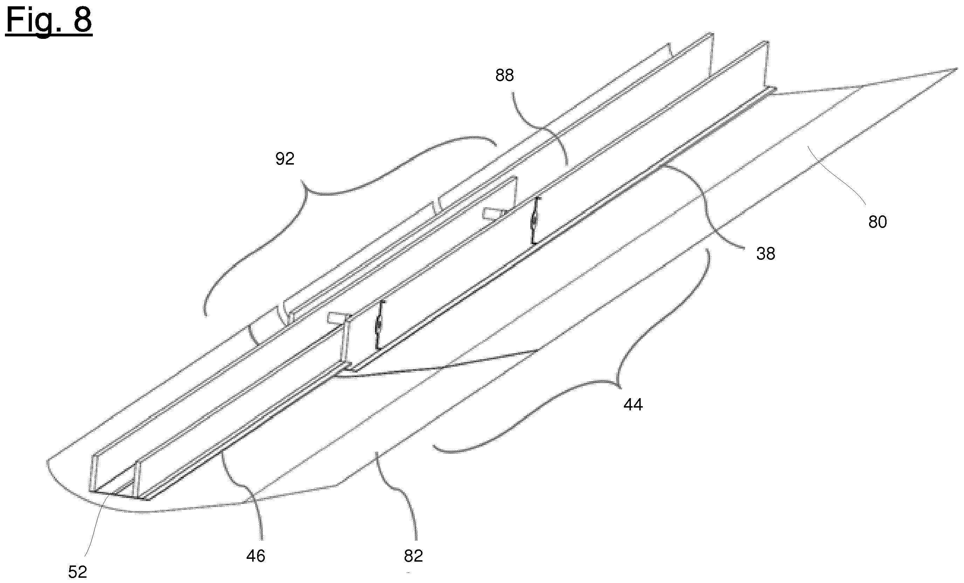

Fig. 8 zeigt die Anordnung aus Fig. 7 nach dem Einsetzen der Stegbaugruppe 88. Die Stegbaugruppe 88 wird in die erste Halbschale eingesetzt und mit den Gurten 40, 32 verbunden.

Fig. 9 illustriert das Montieren zweier erster Anschlusselemente 66. Hierzu zeigt Fig. 11 im Detail, dass die ersten Anschlusselemente 66 jeweils einen Anschlussring 84 aufweisen, der eine der Hülsen 62 umschließt und elektrisch mit dieser verbunden ist. Am anderen Ende weisen die ersten Anschlusselemente 66 jeweils einen Anschlussabschnitt 86 auf, der mit einer blockförmigen Anschlussplatte 94 des Blitzschutzleiters 52 des blattspitzenseitigen Längsabschnitts 22 verbunden ist.

Fig. 10 zeigt eines der zweiten Anschlusselemente 68. Gut erkennbar sind die mittig angeordnete Anschlussscheibe mit der Durchgangsöffnung 70 und die beiden sich davon in radialer Richtung nach außen erstreckenden Arme 72 mit ihren abgewinkelten Enden.

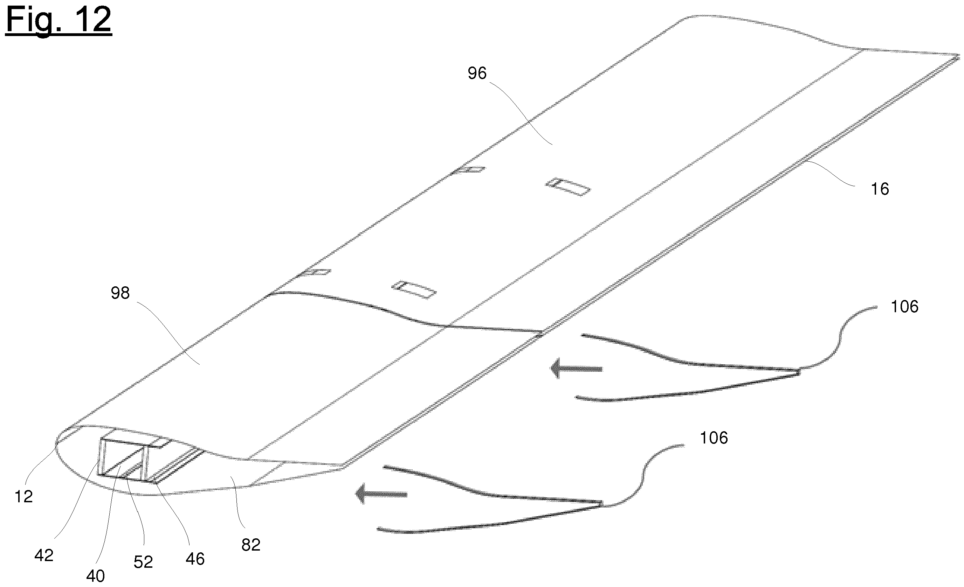

Fig. 12 zeigt die Anordnung aus Fig. 9 nach der Montage der Gurte 40, 32 und der zweiten Halbschalen 96, 98 des blattwurzelseitigen bzw. des blattspitzenseitigen Längsabschnitts 20, 22. Man erkennt, dass die zweite Halbschale 96 des blattwurzelseitigen Längsabschnitts 20 entlang der Profilendkante 16 und entlang der Profilnasenkante 12 mit der ersten Halbschale 80 des blattwurzelseitigen Längsabschnitts 20 verbunden ist, ebenso wie die zweite Halbschale 98 des blattspitzenseitigen Längsabschnitts 22 mit der ersten Halbschale 82 des blattspitzenseitigen Längsabschnitts 22 verbunden ist.

An der Außenseite der aerodynamischen Hülle des blattspitzenseitigen Längsabschnitts 22 sind in Fig. 12 beispielhaft zwei Potentialausgleichsschienen 106 angedeutet. Diese verlaufen um die Profilendkante 16 herum und werden von außen mit den beiden einander gegenüberliegenden, weiteren Blitzschutzleitern 46 verbunden, um einen Potentialausgleich zwischen diesen herzustellen.

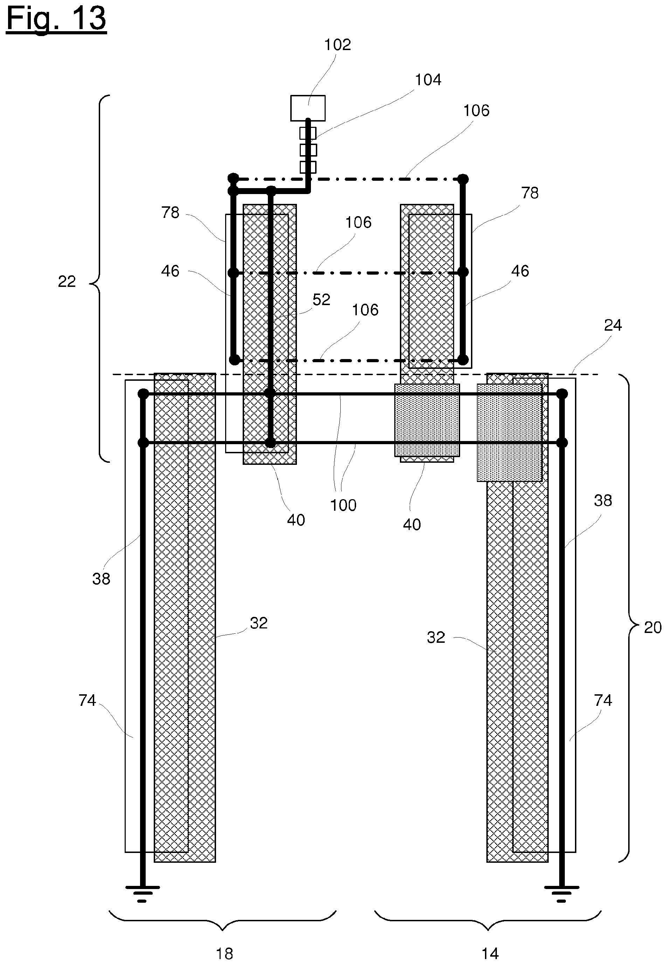

Fig. 13 zeigt schematisch insbesondere die am Windenergieanlagenrotorblatt 10 aus Fig. 1 ausgebildeten elektrischen Verbindungen. Der Blick ist auf die Innenseite der ersten und zweiten Halbschalen gerichtet, nachdem diese um die Profilendkante 16 herum "aufgeklappt" worden sind. Dargestellt sind die beiden Gurte 32 des blattwurzelseitigen Längsabschnitts 22 und die beiden Gurte 40 des blattspitzenseitigen Längsabschnitts 22. Die Teilungsebene 24 ist durch eine gestrichelte Linie angedeutet. Ebenfalls dargestellt sind die beiden Blitzschutzleiter 38 des blattwurzelseitigen Längsabschnitts 20, die entlang der Gurte 32 verlaufen und über die Potentialausgleichslagen 74 elektrisch mit diesen verbunden sind.

Der blattspitzenseitige Längsabschnitt 22 weist entlang der beiden Gurte 40 zwei weitere Blitzschutzleiter 46 auf, die etwa bis an die Teilungsebene 24 heranreichen. Der Blitzschutzleiter 52 des blattspitzenseitigen Längsabschnitts 20 erstreckt sich hingegen über die gesamte Länge der Gurte 40, reicht also über die Teilungsebene 24 hinaus in den Überlappungsbereich 44 hinein. Im Überlappungsbereich 44 sind zwei horizontal verlaufende, elektrische Verbindungen 100 dargestellt, die durch die beiden Bolzen 26 bzw. die damit zusammenwirkenden, inneren und äußeren Bolzenaufnahmen hergestellt werden.

Am blattspitzenseitigen Ende des blattspitzenseitigen Längsabschnitts 22 ist ein Blattspitzenrezeptor 102 dargestellt, der über ein Verbindungskabel 104 mit einem blattspitzenseitigen Ende des Blitzschutzleiters 52 des blattspitzenseitigen Längsabschnitts 20 verbunden ist. Weiterhin ist dieses Verbindungskabel 104 mit einem blattspitzenseitigen Ende eines der weiteren Blitzschutzleiter 46 verbunden. Ebenfalls mit dem Verbindungskabel 104 verbunden sind drei weitere Blitzschutzrezeptoren, die beispielsweise in einem Abstand von der Blattspitze in der aerodynamischen Hülle des blattspitzenseitigen Längsabschnitts 22 angeordnet sind.

Die weiteren Blitzschutzleiter 46 sind mit den Gurten 40 des blattspitzenseitigen Längsabschnitts 22 jeweils durch eine Potentialausgleichslage 78 verbunden. An einem der Gurte 40, nämlich an demjenigen, in dessen Mitte der Blitzschutzleiter 52 verläuft, erstreckt sich diese Potentialausgleichslage 78 bis zum blattwurzelseitigen Ende des Gurts 40. Bei dem anderen Gurt 40 endet die Potentialausgleichslage 78 etwa am blattwurzelseitigen Ende des weiteren Blitzschutzleiters 46, also nahe der Teilungsebene 24. Der darüber hinausgehende Abschnitt dieses Gurts 40, der in dem Überlappungsbereich 44 angeordnet ist, weist keinen Blitzschutzleiter auf und ist elektrisch von dem Gurt 32 des blattwurzelseitigen Längsabschnitts 22 isoliert. Hierfür kann beispielsweise eine Isolationslage aus einem Glasfasermaterial vorgesehen sein.

Drei weitere Potentialausgleichsverbindungen sind zwischen den beiden weiteren Blitzschutzleitern 46 des blattspitzenseitigen Längsabschnitts 20 hergestellt, und zwar über die an der Außenseite des Windenergieanlagenrotorblatts 10 angeordneten Potentialausgleichsschienen 106.

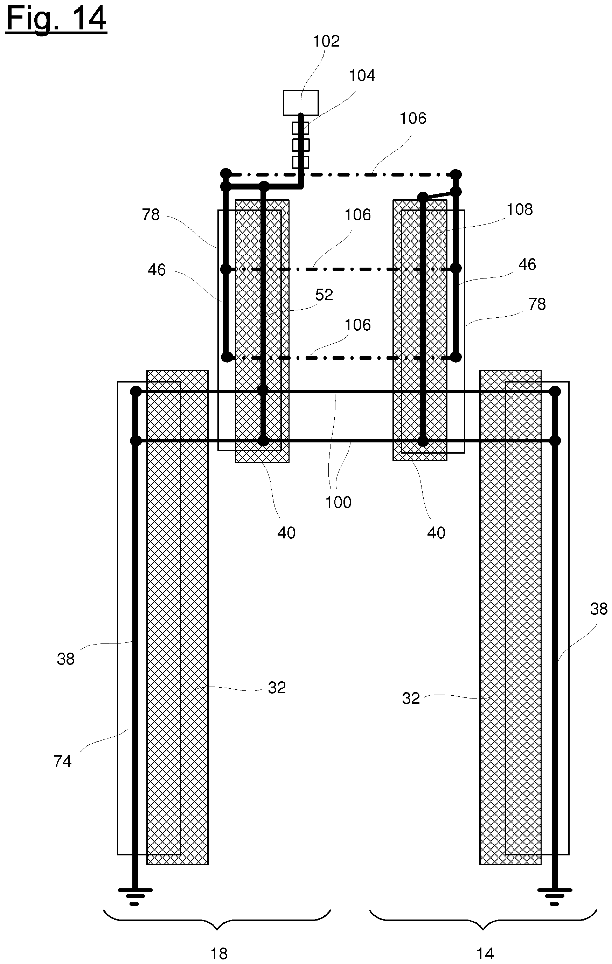

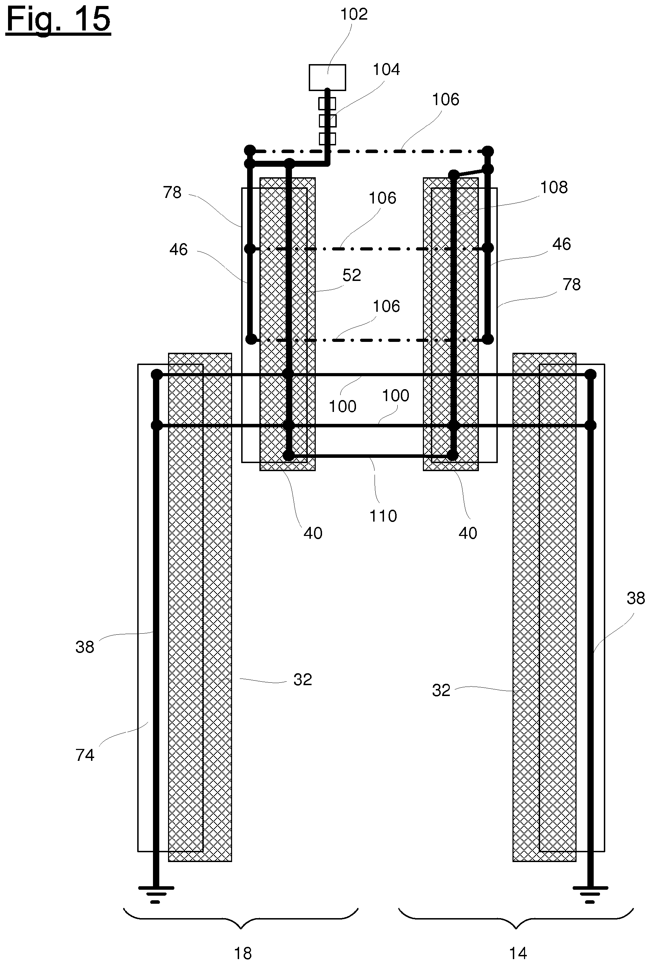

Die Figuren 14 und 15 zeigen zwei ergänzende Varianten des Ausführungsbeispiels aus Fig. 13. Die übereinstimmenden Elemente sind mit den gleichen Bezugszeichen wie in Fig. 13 versehen. Fig. 14 unterscheidet sich von dem Ausführungsbeispiel der Fig. 13 durch einen zweiten Blitzschutzleiter 108, der an dem dem Blitzschutzleiter 52 gegenüberliegenden Gurt 40 dieses Längsabschnitts 22 angeordnet ist. Er erstreckt sich ebenso wie der Blitzschutzleiter 52 bis in den Überlappungsbereich 44 hinein und ist über die elektrische Verbindung 100 mit dem Blitzschutzleiter 52 und den Blitzschutzleitern 38 verbunden. Hierfür ist er ebenfalls mit einem ersten Anschlusselement 66 versehen, das an der inneren Bolzenaufnahme des blattspitzenseitigen Längsabschnitts 22 befestigt ist.

Im Unterschied zur Fig. 13 erstrecken sich hier außerdem beide Potentialausgleichslagen 78 über die gesamte Länge der jeweiligen Gurte 40, sodass diese auch im Überlappungsbereich 44 beide ein Potentialausgleich relativ zu den Gurten 32 des blattwurzelseitigen Längsabschnitts 20 aufweisen. Eine Isolation wie in Fig. 13 ist daher nicht erforderlich.

Im Ausführungsbeispiel der Fig. 15 weisen ebenfalls beide Gurte 40 des blattspitzenseitigen Längsabschnitts 22 einen Blitzschutzleiter 52 bzw. eine zweiten Blitzschutzleiter 108 auf. Diese erstrecken sich nunmehr bis zum blattwurzelseitigen Ende der Gurte 40, wo sie über eine gesonderte elektrische Verbindung 110 miteinander verbunden sind. Diese gesonderte elektrische Verbindung 110 kann beispielsweise über ein Kabel hergestellt werden, das an dem vor dem Zusammenfügen der beiden Längsabschnitte 20, 22 frei zugänglichen Ende der Gurte 40 befestigt werden kann. Auf ein erstes Anschlusselement 66 an dem zweiten Blitzschutzleiter 108 des blattspitzenseitigen Längsabschnitts 22 kann daher verzichtet werden.

### Liste der Bezugszeichen:

- 10: Windenergieanlagenrotorblatt
- 12: Profilnasenkante
- 14: Druckseite
- 16: Profilendkante
- 18: Saugseite
- 20: blattwurzelseitiger Längsabschnitt
- 22: blattspitzenseitiger Längsabschnitt
- 24: Teilungsebene
- 26: Bolzen
- 28: Montageöffnung
- 30: weitere Montageöffnung
- 32: Gurt des blattwurzelseitigen Längsabschnitts
- 34: Steg des blattwurzelseitigen Längsabschnitts
- 36: Einleger des blattwurzelseitigen Längsabschnitts
- 38: Blitzschutzleiter des blattwurzelseitigen Längsabschnitts
- 40: Gurt des blattspitzenseitigen Längsabschnitts
- 42: Steg des blattspitzenseitigen Längsabschnitts
- 44: Überlappungsbereich
- 46: weiterer Blitzschutzleiter des blattspitzenseitigen Längsabschnitts
- 48: Einleger des blattspitzenseitigen Längsabschnitts
- 50: aerodynamische Hülle
- 52: Blitzschutzleiter des blattspitzenseitigen Längsabschnitts
- 54: Kopf
- 56: Mutter
- 58: Buchse
- 60: Flansch
- 62: Hülse
- 64: Flanschelemente
- 66: erstes Anschlusselement
- 68: zweites Anschlusselement
- 70: Durchgangsöffnung
- 72: Arm des zweiten Anschlusselements
- 74: Potentialausgleichslage
- 76: Einleger des blattspitzenseitigen Längsabschnitts
- 78: Potentialausgleichslage
- 80: erste Halbschale des blattwurzelseitigen Längsabschnitts
- 82: erste Halbschale des blattspitzenseitigen Längsabschnitts
- 84: Anschlussring
- 86: Anschlussabschnitt
- 88: Stegbaugruppe
- 90: Gurtbaugruppe des blattwurzelseitigen Längsabschnitts
- 92: Gurtbaugruppe des blattspitzenseitigen Längsabschnitts
- 94: Anschlussplatte
- 96: zweite Halbschale des blattwurzelseitigen Längsabschnitts
- 98: zweite Halbschale des blattspitzenseitigen Längsabschnitts
- 100: elektrische Verbindung
- 102: Blattspitzenrezeptor
- 104: Verbindungskabel
- 106: Potentialausgleichsschiene
- 108: zweiter Blitzschutzleiter
- 110: elektrische Verbindung

## Patentansprüche

1. Windenergieanlagenrotorblatt (10), das in einen blattwurzelseitigen Längsabschnitt (20) und einen blattspitzenseitigen Längsabschnitt (22) teilbar ist, wobei
• die beiden Längsabschnitte (20, 22) jeweils zwei einander gegenüberliegend angeordnete Gurte (32, 40), zwei diese Gurte (32, 40) miteinander verbindende Stege (34, 43) und einen Blitzschutzleiter (38, 52) aufweisen,
• in einem Überlappungsbereich (44) die beiden Stege (42) des blattspitzenseitigen Längsabschnitts (22) zwischen den beiden Stegen (34) des blattwurzelseitigen Längsabschnitts (20) angeordnet sind,
• die beiden Längsabschnitte (20, 22) in dem Überlappungsbereich (44) durch einen Bolzen (26) miteinander verbunden sind, der durch eine innere Bolzenaufnahme der Stege (42) des blattspitzenseitigen Längsabschnitts (22) und durch eine äußere Bolzenaufnahme der Stege (34) des blattwurzelseitigen Längsabschnitts (20) hindurchgeführt ist,
• der Blitzschutzleiter (52) des blattspitzenseitiges Längsabschnitts (22) ein erstes Anschlusselement (66) aufweist, das elektrisch leitend an der inneren Bolzenaufnahme befestigt ist, und
• der Blitzschutzleiter (38) des blattwurzelseitigen Längsabschnitts (20) ein zweites Anschlusselement (68) aufweist, das elektrisch leitend an der äußeren Bolzenaufnahme befestigt ist.

2. Windenergieanlagenrotorblatt (10) nach Anspruch 1, **dadurch gekennzeichnet, dass** die innere Bolzenaufnahme eine Hülse (62) aufweist, die in Öffnungen der Stege (42) des blattspitzenseitigen Längsabschnitts (22) eingesetzt ist und einen Abstand zwischen diesen beiden Stegen (42) überbrückt.

3. Windenergieanlagenrotorblatt (10) nach Anspruch 1 oder 2, **dadurch gekennzeichnet, dass** die äußere Bolzenaufnahme eine Buchse (58) aufweist, die in eine Öffnung eines Stegs (34) des blattwurzelseitigen Längsabschnitts (20) eingesetzt ist.

4. Windenergieanlagenrotorblatt (10) nach einem der Ansprüche 1 bis 3, **dadurch gekennzeichnet, dass** das erste Anschlusselement (66) und/oder mindestens ein Abschnitt des Blitzschutzleiters (52) des blattspitzenseitigen Längsabschnitts (22) innerhalb eines Holmkastens angeordnet ist, der von den Stegen (42) und Gurten (40) des blattspitzenseitigen Längsabschnitts (22) gebildet ist.

5. Windenergieanlagenrotorblatt (10) nach einem der Ansprüche 1 bis 4, **dadurch gekennzeichnet, dass** das erste Anschlusselement (66) einen Anschlussring oder eine Anschlussschelle aufweist, die die innere Bolzenaufnahme umschließt.

6. Windenergieanlagenrotorblatt (10) nach einem der Ansprüche 1 bis 5, **dadurch gekennzeichnet, dass** das zweite Anschlusselement (68) außerhalb eines Holmkastens angeordnet ist, der von den Stegen (34) und Gurten (32) des blattwurzelseitigen Längsabschnitts (20) gebildet ist.

7. Windenergieanlagenrotorblatt (10) nach einem der Ansprüche 1 bis 6, **dadurch gekennzeichnet, dass** das zweite Anschlusselement (68) eine Anschlussscheibe mit einer Durchgangsöffnung (70) oder einer Ausnehmung aufweist, durch die der Bolzen (26) hindurchgeführt ist.

8. Windenergieanlagenrotorblatt (10) nach einem der Ansprüche 1 bis 7, **dadurch gekennzeichnet, dass** die Gurte (32) des blattwurzelseitigen Längsabschnitts (20) ein Kohlenstofffasermaterial aufweisen und der Blitzschutzleiter (38) des blattwurzelseitigen Längsabschnitts (20) entlang eines dieser Gurte (32) verläuft und über eine Potentialausgleichsverbindung mit diesem Gurt (32) elektrisch verbunden ist.

9. Windenergieanlagenrotorblatt (10) nach Anspruch 8, **dadurch gekennzeichnet, dass** der blattwurzelseitige Längsabschnitt (20) einen weiteren Blitzschutzleiter (38) aufweist, der entlang des anderen dieser Gurte (32) verläuft und über eine Potentialausgleichsverbindung mit diesem Gurt elektrisch verbunden ist.

10. Windenergieanlagenrotorblatt (10) nach Anspruch 9, **dadurch gekennzeichnet, dass** der Blitzschutzleiter (38) des blattwurzelseitigen Längsabschnitts (20) und der weitere Blitzschutzleiter (38) des blattwurzelseitigen Längsabschnitts (20) durch das zweite Anschlusselement (68) elektrisch mit der äußeren Bolzenaufnahme verbunden sind.

11. Windenergieanlagenrotorblatt (10) nach einem der Ansprüche 1 bis 10, **dadurch gekennzeichnet, dass** der blattspitzenseitige Längsabschnitt (22) einen zweiten Blitzschutzleiter (108) aufweist, wobei der Blitzschutzleiter (52) des blattspitzenseitigen Längsabschnitts (22) und der zweite Blitzschutzleiter (108) des blattspitzenseitigen Längsabschnitts (22) jeweils an einer Innenseite eines der Gurte (40) des blattspitzenseitigen Längsabschnitts (22) angeordnet und am blattwurzelseitigen und/oder am blattspitzenseitigen Ende dieser Gurte (40) über eine Verbindungsleitung (110) elektrisch miteinander verbunden sind.

12. Windenergieanlagenrotorblatt (10) nach einem der Ansprüche 1 bis 11, **dadurch gekennzeichnet, dass** die Gurte (40) des blattspitzenseitigen Längsabschnitts (22) ein Kohlenstofffasermaterial aufweisen und der blattspitzenseitige Längsabschnitt (22) zwei weitere Blitzschutzleiter (46) aufweist, die jeweils entlang eines dieser Gurte (40) verlaufen und über eine Potentialausgleichsverbindung mit diesem Gurt (40) elektrisch verbunden sind, wobei die beiden weiteren Blitzschutzleiter (46) des blattspitzenseitigen Längsabschnitts (22) an einem blattspitzenseitigen Ende des blattspitzenseitigen Längsabschnitts (22) über ein Verbindungskabel (104) und/oder über mindestens eine an einer Außenseite des Windenergieanlagenrotorblatts (10) angeordnete Potentialausgleichsschiene (106) elektrisch miteinander verbunden sind.

13. Verfahren zur Herstellung eines Windenergieanlagenrotorblatts (10), das in einen blattwurzelseitigen Längsabschnitt (20) und einen blattspitzenseitigen Längsabschnitt (22) teilbar ist, mit den folgenden Schritten:
• Herstellen des blattwurzelseitigen Längsabschnitts (20), der zwei einander gegenüberliegend angeordnete Gurte (32), zwei diese Gurte (32) miteinander verbindende Stege (34) und einen Blitzschutzleiter (38) aufweist, wobei eine elektrisch leitende Verbindung zwischen einer äußeren Bolzenaufnahme der Stege (34) und dem Blitzschutzleiter (38) hergestellt wird,
• Herstellen des blattspitzenseitigen Längsabschnitts (22), der zwei einander gegenüberliegend angeordnete Gurte (40), zwei diese Gurte (40) miteinander verbindende Stege (42) und einen Blitzschutzleiter (52) aufweist, wobei eine elektrisch leitende Verbindung zwischen einer inneren Bolzenaufnahme der Stege (42) und dem Blitzschutzleiter (52) hergestellt wird,
• Anordnen der beiden Längsabschnitte (20, 22) relativ zueinander derart, dass in einem Überlappungsbereich (44) die beiden Stege (42) des blattspitzenseitigen Längsabschnitts (22) zwischen den beiden Stegen (34) des blattwurzelseitigen Längsabschnitts (20) angeordnet sind,
• Hindurchführen eines Bolzens (26) durch die äußere Bolzenaufnahme und durch die innere Bolzenaufnahme,
• Herstellen sowohl einer mechanischen Verbindung der beiden Längsabschnitte (20, 22) miteinander als auch einer elektrischen Verbindung zwischen den beiden Blitzschutzleitern (38, 52) durch Verspannen der beiden Bolzenaufnahmen miteinander mit dem Bolzen (26).

14. Verfahren nach Anspruch 13, **dadurch gekennzeichnet, dass** die elektrisch leitende Verbindung zwischen der inneren Bolzenaufnahme der Stege (42) des blattspitzenseitigen Längsabschnitts (22) und dem Blitzschutzleiter (52) des blattspitzenseitigen Längsabschnitts (22) hergestellt wird, bevor ein von den Gurten (40) und Stegen (42) des blattspitzenseitigen Längsabschnitts (22) gebildeter Holmkasten geschlossen wird.

15. Verfahren nach Anspruch 13 oder 14, **dadurch gekennzeichnet, dass** die elektrisch leitende Verbindung zwischen der äußeren Bolzenaufnahme und dem Blitzschutzleiter (38) des blattwurzelseitigen Längsabschnitts (20) hergestellt wird, bevor zwei Halbschalen (80, 96) des blattwurzelseitigen Längsabschnitts (20) zu einer aerodynamischen Hülle des blattwurzelseitigen Längsabschnitts (20) zusammengefügt werden und/oder bevor ein von den Gurten (32) und Stegen (34) des blattwurzelseitigen Längsabschnitts (20) gebildeter Holmkasten geschlossen wird.
